# EUROPÄISCHE PATENTANMELDUNG

(11) **EP 1 832 454 A1**
(43) Veröffentlichungstag der Anmeldung: **12.09.2007**
(21) Anmeldenummer: 07004327.8
(22) Anmeldetag: 02.03.2007
(51) Int. Cl.: B60J 5/04, E06B 11/08

(54) **Vorrichtung zur Verhinderung des Einstiegs von Personen in die Türöffnung eines Fahrzeugs, insbesondere eines Busses**

(30) Priorität: 10.03.2006 DE 102006011196
(71) Anmelder: Hübner GmbH, 34123 Kassel (DE)
(72) Erfinder: Sprenger, Thorsten, 34253 Lohfelden (DE)
(74) Vertreter: Walther, Robert

(57) **Zusammenfassung**

Gegenstand der Erfindung ist eine Vorrichtung zur Verhinderung des Einstiegs von Personen in die Türöffnung eines Fahrzeugs, insbesondere eines Busses, bei geöffneter Tür, wobei die Vorrichtung eine vom Fahrzeuginneren nach außen schwenkbare Sperreinrichtung (10) umfasst, wobei die Sperreinrichtung (10) zwei Reihen mehrerer übereinander angeordnete Arme umfasst, wobei die Arme (20) einzeln nach außen verschwenkbar sind, wobei die jeweils in einer Ebene zueinander liegenden Arme (20) winklig nach außen weisend ausgerichtet sind.

## Beschreibung

Die Erfindung betrifft eine Vorrichtung zur Verhinderung des Einstiegs von Personen in die Türöffnung eines Fahrzeugs, insbesondere eines Busses, bei geöffneter Tür, wobei die Vorrichtung eine vom Fahrzeuginnern nach außen schwenkbare Sperreinrichtung umfasst, wobei die Sperreinrichtung zwei Reihen mehrerer übereinander angeordneter Arme umfasst.

Die FR 2 053 549 zeigt eine Sperreinrichtung für einen Durchgang mit zwei winklig zueinander stehenden Rahmen, die in einer Richtung durch Verschwenken den Durchgang freigeben.

Aus der DE 43 05 325 A1 ist eine Durchgangssperreinrichtung bekannt, die mehrere übereinander angeordnete Arme umfasst, die in ihrer Gesamtheit verschwenkbar ausgebildet sind.

Im Bereich des vorderen Türeinstiegs eines Busses ist der Einstieg in zwei Teile unterteilt, wobei der eine unmittelbar am Busfahrer vorbeiführende Einstieg für die einsteigenden Personen der einzige Zustieg sein soll, wohingegen der parallel dazu verlaufende Ausstieg nur für aussteigende Personen zugänglich sein soll. Die beiden Ein- und Ausstiege der vorderen Türöffnung sind mit Sperreinrichtungen versehen, die den Durchgang nur in eine Richtung ermöglichen. Eine solche Sperreinrichtung stellt sich im Einzelnen als ein schwenkbarer Arm dar, der lediglich in eine Richtung schwenkbar ist.

Diese zuvor geschilderte Ausbildung des Türeinstiegs dient im Wesentlichen dem reibungslosen parallelen Ein- und Ausstieg von Personen.

Busse und auch andere Fahrzeuge besitzen allerdings nicht nur eine vordere Türöffnung, sondern zumindest eine oder mehrere hintere Türöffnungen, bei denen der Zugang von Personen durch den Busfahrer bei geöffneter Tür nicht überwacht werden kann. Insofern ist es auch so, dass insbesondere nachts die hinteren Türen eines Busses geschlossen bleiben, um sicherzustellen, dass die den Bus betretenden Personen zur Kontrolle unmittelbar am Busfahrer vorbeigeleitet werden. Dies stellt nachts kein Problem dar, da üblicherweise nur eine geringe Anzahl von Menschen den Bus besteigen bzw. aus dem Bus aussteigen.

Ganz anders stellt sich die Sachlage dar, wenn zu Hauptverkehrszeiten gewährleistet sein soll, dass z. B. die hintere Türöffnung nur als Ausstieg dienen soll, hingegen die vordere Türöffnung zur Kontrolle der einsteigenden Personen durch den Busfahrer, nur für den Einstieg vorgesehen sein soll. Eine solche Handhabung des Ein- und Ausstiegs von Personen in insbesondere Busse ist unter Sicherheitsaspekten erstrebenswert. Im nahen Osten und hier insbesondere in Israel, ist bekannt, dass Selbstmordattentäter mit Bomben Busse besteigen, um diese dann im Bus zu zünden. Die dortigen Busfahrer sind allerdings derart geschult, dass sie solche Personen durchaus in der Lage sind zu erkennen und ihnen den Zutritt zum Bus zu verwehren, wenn diese Personen gezwungen sind, beim Einstieg in den Bus den Busfahrer zu passieren. Eine solche Vorgehensweise ist allerdings dann nicht mehr gewährleistet, wenn die hintere Bustür geöffnet ist, und beliebige Personen ein- und aussteigen können. Es hat sich herausgestellt, dass eine einfache Sperreinrichtung in Form eines in einer Richtung schwenkbaren Armes im hinteren Türbereich nicht gewährleisten kann, dass dort keine Personen zusteigen, weil dieser Arm von einer Person, die unbedingt in den Bus einsteigen will, problemlos mit einer Hand nach außen verschwenkt werden kann.

Der Erfindung liegt daher die Aufgabe zugrunde, eine Vorrichtung der eingangs genannten Art bereitzustellen, mit der Personen der Zutritt zum Bus mit vertretbarem Aufwand verwehrt werden kann, hingegen das Verlassen des Busses für im Bus befindliche Personen nach wie vor problemlos möglich ist.

Die Aufgabe wird erfindungsgemäß dadurch gelöst, dass die Arme einzeln nach außen verschwenkbar sind, wobei die jeweils in einer Ebene zueinander liegenden Arme winklig nach außen weisend ausgerichtet sind. Durch die Anordnung von fünf oder mehr Armpaaren übereinander, wobei ein jedes Armpaar zwei in einer Ebene liegende Arme umfasst, die winklig aufeinander zugerichtet sind und im Wesentlichen beinahe mit ihren Enden einander berühren und daher nicht nach innen verschwenkt werden können, wird der Zugang für Personen in das Innere eines Busses insofern zuverlässig verhindert, weil durch die Person jeder Arm einzeln nach außen verschwenkt werden müsste, wobei die entsprechende Person jedoch nur zwei Arme bzw. Hände zur Verfügung hat, um eine solches zu bewerkstelligen. Bei fünf oder mehr übereinander angeordneten Armpaaren der eingangs genannten Art, müssten für den Zutritt die Arme oder Armpaare mehr oder weniger gleichzeitig verschwenkt werden, was unmöglich ist bzw. mit einem erheblichen Aufwand verbunden ist, der von anderen Passagieren registriert würde. Es ist damit zu rechnen, dass in einem solchen Fall die anderen Passagiere entsprechende Abwehrmaßnahmen auslösen würden, um die entsprechende Person tatsächlich am Zutritt des Busses zu hindern.

Vorteilhafte Merkmale zu der Erfindung sind den Unteransprüchen zu entnehmen.

So ist insbesondere vorgesehen, dass die übereinander angeordneten Arme jeweils an einer Säule, und hier insbesondere einer Drehsäule, angeordnet sind. Wie bereits an anderer Stelle ausgeführt, sind die Arme einzeln verschwenkbar, d. h. die Arme sind einzeln an der Drehsäule verschwenkbar angeordnet. Durch die Ausbildung der Säule als Drehsäule wird die Möglichkeit eröffnet, aus welchen Gründen auch immer, die Säule insgesamt zu verschwenken, um so die Arme insgesamt aus dem Einstiegsbereich der Tür zu verschwenken, um so einen ungehinderten Zutritt in den Bus zu gewährleisten. Um ein unbefugtes Verschwenken der Säulen zu verhindern, sind die Säulen abschließbar, so dass die Verdrehung der Säulen nur mit Hilfe eines Schlüssels möglich ist.

In Bezug auf die Anordnung der einzelnen verschwenkbaren Arme, insbesondere an der Säule und hier insbesondere an einer Drehsäule, ist vorgesehen, dass jeder Arm durch ein Schwenklager gehalten ist. Ein solches Schwenklager weist eine Klaue zur Aufnahme durch die Säule auf, wobei die Klaue einen Bolzen zeigt, wobei durch den Bolzen drehbar ein Stutzen zur Aufnahme des Arms vorgesehen ist, wobei der Stutzen gegen die Kraft einer Feder auf dem Bolzen verdrehbar ist. Hierdurch ist sichergestellt, dass nach dem Ausschwenken der einzelnen Arme in Richtung auf die Außenseite des Busses, sich die Arme unmittelbar danach wieder in ihre Ausgangsposition aufgrund der Federwirkung zurückbewegen. Um des Weiteren sicherzustellen, dass die Arme in eine definierte Ausgangslage nach dem Ausschwenken zurückgehen, ist vorgesehen, dass ein jeder Stutzen in Geschlossenstellung des Armes an einem entsprechenden Anschlag anliegt.

Wie bereits zu eingangs erläutert, soll die Möglichkeit eröffnet werden, die Arme insgesamt zu verschwenken. In diesem Zusammenhang ist vorgesehen, dass die Drehsäule in mindestens einer zweiten Stellung durch eine Arretiereinrichtung feststellbar ist. Das heißt, die Arme können zwei Stellungen aufweisen, nämlich eine erste Stellung, in der die Arme den Zutritt für Personen von außen verhindern, und eine zweite verschwenkte Stellung der Arme, in denen die Arme den Zutritt zum Businneren freigeben.

Die Arretiereinrichtung umfasst in diesem Zusammenhang einen hülsenförmigen Sattel, der die Drehsäule umgibt, wobei die Drehsäule relativ zum Sattel verdrehbar ist, wobei der Sattel mit dem Fahrzeug drehfest verbunden ist, wobei die Drehsäule einen axial auf der Drehsäule verschieblich aber drehfest mit der Drehsäule verbundenen Ring aufweist, der in formschlüssigen Eingriff mit dem Sattel bringbar ist. Hierdurch wird deutlich, dass durch Verdrehung des Ringes, der eine Einheit mit der Drehsäule darstellt, die Drehsäule insgesamt verdreht werden kann, wobei zur Arretierung der Drehsäule in dieser Endstellung der Sattel dem Ring zugewandt mindestens eine Ausnehmung zur Aufnahme einer am Ring angeordneten Nase aufweist, um eine formschlüssige Verbindung zwischen Sattel und Ring zu ermöglichen. Um zu gewährleisten, dass auch bei Erschütterungen der Ring auf dem Sattel immer aufsitzt, ist vorgesehen, dass der Ring entgegen der Kraft einer Feder axial verschieblich ist. Insbesondere ist allerdings vorgesehen, dass der Ring mit dem Sattel verriegelbar ist, und zwar vorzugsweise durch ein Schloss mit einem Schlüssel, so dass nur befugten Personen die Offenstellung der Vorrichtung zur Verhinderung des Einstiegs von Personen in die Türöffnung eines Fahrzeugs möglich ist.

Anhand der Zeichnungen wird die Erfindung nachstehend beispielhaft näher erläutert.
- Fig. 1: zeigt perspektivisch den Einstiegsbereich eines Busses, der mit der erfindungsgemäßen Vorrichtung versehen ist;
- Fig. 2: zeigt das Schwenklager in einer Seitenansicht im Schnitt;
- Fig. 3: zeigt eine Draufsicht auf das Schwenklager gemäß Fig. 2;
- Fig.4: zeigt die Arretiereinrichtung auf der Drehsäule mit angedeutetem Schwenklager;
- Fig. 5: zeigt die Arretiereinrichtung in einer weiteren Stellung.

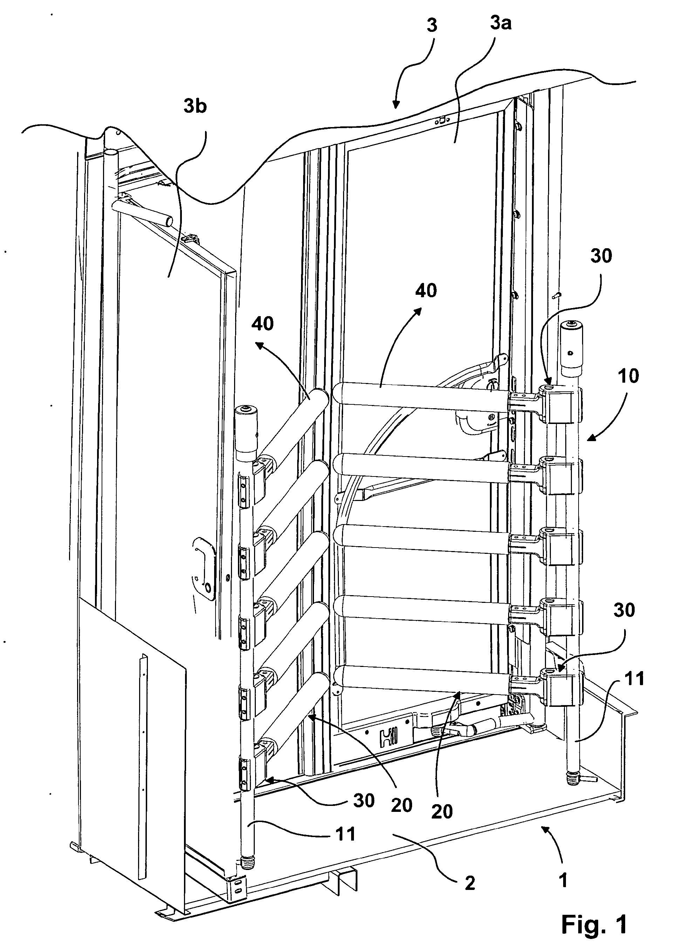

Gemäß Fig. 1 weist der insgesamt mit 1 bezeichnete Einstieg die Einstiegplattform 2 des Busses auf, sowie eine zweiflüglige Schwenktür 3 mit den beiden Türflügeln 3a und 3b, wobei in der Figur 1 der Türflügel 3b in Offenstellung steht.

Die eigentliche Vorrichtung zur Verhinderung des Einstiegs von Personen in die Türöffnung eines Fahrzeugs ist insgesamt mit 10 bezeichnet. Diese Vorrichtung umfasst zwei Drehsäulen 11, die jeweils fünf übereinander angeordnete insgesamt mit 20 bezeichnete Arme aufweisen. Ein jeder Arm 20 ist über ein Schwenklager 30 mit der Drehsäule 11 verbunden.

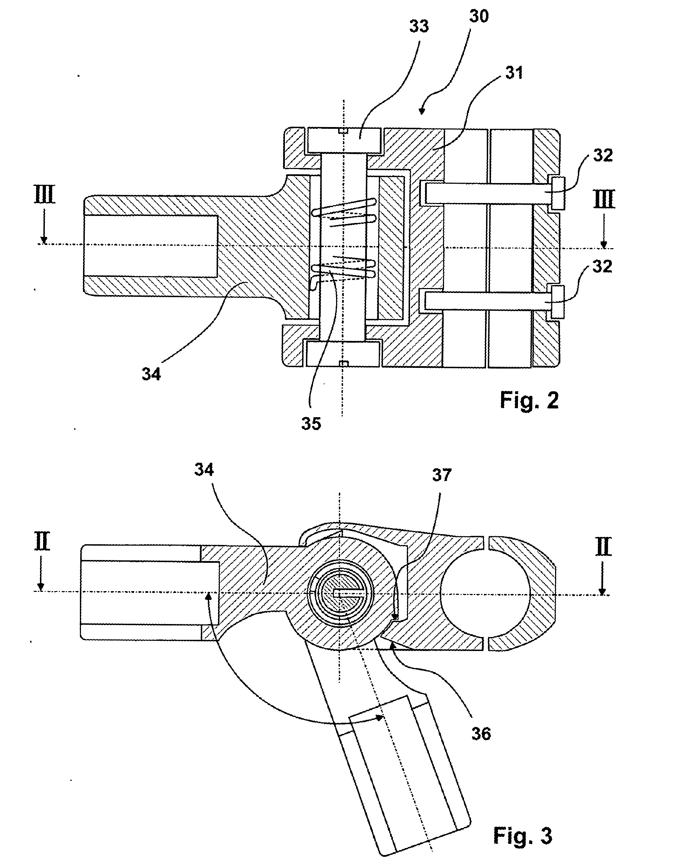

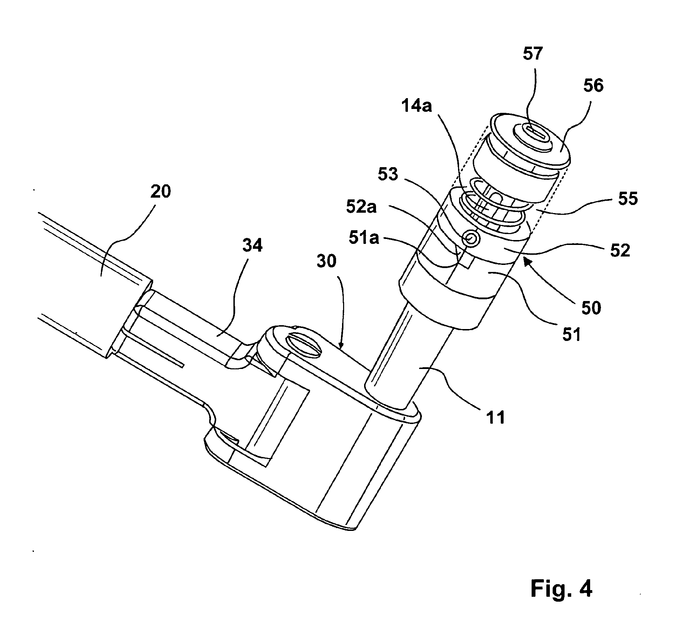

Die Ausbildung des Schwenklagers 30 ergibt sich in Anschauung der Figuren 2 und 3. Das Schwenklager 30 umfasst eine Klaue 31 zur Verbindung mit der Drehsäule 11. Die Verbindung der Klaue mit der Drehsäule erfolgt kraftschlüssig durch die Schrauben 32. Die Klaue besitzt darüber hinaus den Bolzen 33, um den herum der Stutzen 34 entgegen der Kraft der Spiralfeder 35 drehbar gelagert ist. Der Stutzen 34 nimmt den Arm 20 (in Fig. 2 nicht darstellt) auf. Um eine Drehbewegung des Stutzens 34 in nur eine Drehrichtung zu gewährleisten, ist ein Anschlag 36 vorgesehen, der mit einer Nase 37 am Stutzen 34, wie aus Fig. 3 erkennbar, zusammenwirkt.

Wesentlich bei der Erfindung ist, dass die beiden Reihen von Armen, die jeweils einzeln an einer Drehsäule verschwenkbar angeordnet sind, und demzufolge auch einzeln in Richtung des Pfeiles 40 verschwenkbar sind, paarweise jeweils in einer Ebene und in einem nach außen gerichteten Winkel zueinander liegen, so dass tatsächlich eine Schwenkbewegung nur in Richtung des Pfeils 40 gewährleistet ist, nicht jedoch entgegen dieser Pfeilrichtung. Das heißt, die Arme 20 sind winklig nach außen gerichtet, wie sich dies aus Fig. 1 sehr anschaulich ergibt.

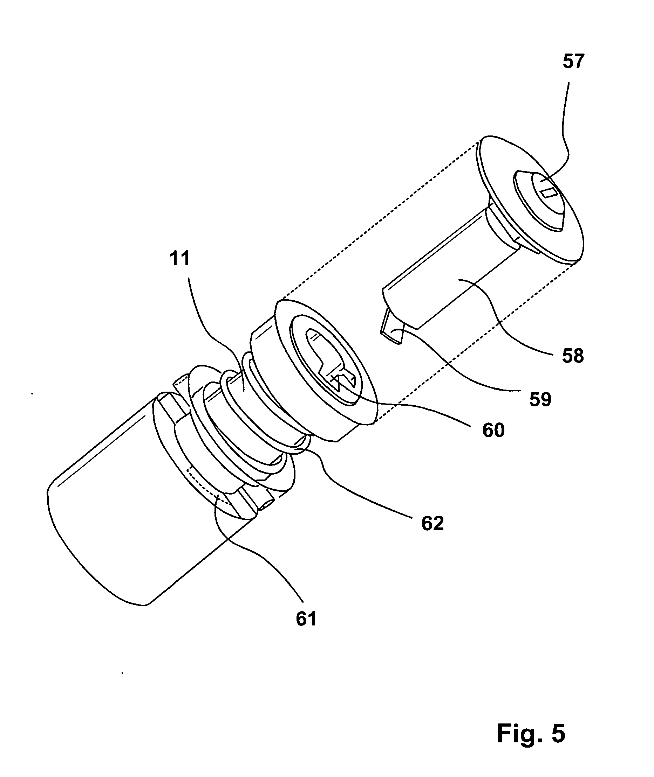

Wie bereits an anderer Stelle erläutert, soll die Möglichkeit bestehen, die Drehsäule 11 insgesamt und damit auch die Arme 20 insgesamt zu verstellen, um einen ungehinderten Zugang in das Businnere zu ermöglichen. In diesem Zusammenhang wird auf die Figuren 4 und 5 verwiesen. Die mit 11 bezeichneter Drehsäule weist an ihrem oberen Ende die insgesamt mit 50 bezeichnete Arretiereinrichtung auf. Die Arretiereinrichtung 50 umfasst den hülsenförmigen Sattel 51, der mit dem Fahrzeug drehfest verbunden ist, aber gleichzeitig eine Verdrehung der Drehsäule 11 relativ zu dem hülsenförmigen Sattel ermöglicht. Auf dem Sattel sitzt der Ring 52, der drehfest mit der Drehsäule in Verbindung steht. Hierzu besitzt der Ring 52 eine Inbusschraube 53, die mit einer mit 11 a versehenen Nut in der Drehsäule in Eingriff steht. Darüber befindet sich eine Hülse 55, die an ihrem oberen Ende den Schlossdeckel 56 mit dem Schloss 57 aufweist.

Wie sich aus Fig. 5 ergibt, umfasst das Schloss 57 einen Zylinder 58, der endseitig eine vorstehende Nase 59 zeigt. Diese Nase 59 hintergreift nach Durchtritt durch eine Aussparung 60 in eine Nut 61 in dem Sattel 51. Durch Verdrehen des Zylinders kann diese Nase 59 in oder außer Eingriff mit der Nut 61 gebracht werden. Darauf hin kann die Hülse 55 nach oben verschoben werden, was die Möglichkeit eröffnet, den Ring 52 entgegen der Kraft der Feder 62 entlang der Drehsäule 11 zu verschieben, um die Nase 52a des Rings 52 außer Eingriff mit der Ausnehmung 51a des hülsenförmigen Sattels zu bringen. Nach Verdrehung des Rings 50 und mithin der Drehsäule 11 um einen bestimmten Winkel, beispielsweise 90°, gibt es eine weitere Ausnehmung 51 a auf der Hülse 51, in die die Nase einlaufen kann, um die Drehsäule in dieser Stellung zu fixieren.

## Patentansprüche

1. Vorrichtung zur Verhinderung des Einstiegs von Personen in die Türöffnung eines Fahrzeugs, insbesondere eines Busses, bei geöffneter Tür, wobei die Vorrichtung eine vom Fahrzeuginneren nach außen schwenkbare Sperreinrichtung (10) umfasst, wobei die Sperreinrichtung (10) zwei Reihen mehrerer übereinander angeordnete Arme umfasst,
**dadurch gekennzeichnet**
**dass** die Arme (20) einzeln nach außen verschwenkbar sind, wobei die jeweils in einer Ebene zueinander liegenden Arme (20) winklig nach außen weisend ausgerichtet sind.

2. Vorrichtung nach Anspruch 1,
**dadurch gekennzeichnet,**
**dass** die übereinander angeordneten Arme (20) jeweils an einer Säule (11) angeordnet sind.

3. Vorrichtung nach Anspruch 2,
**dadurch gekennzeichnet,**
**dass** die Säule als Drehsäule (11) ausgebildet ist.

4. Vorrichtung nach Anspruch 3,
**dadurch gekennzeichnet,**
**dass** die Drehsäule (11) verdrehbar und in mindestens einer zweiten Stellung durch eine Arretiereinrichtung (50) feststellbar ist.

5. Vorrichtung nach einem der voranstehenden Ansprüche,
**dadurch gekennzeichnet,**
**dass** jeder Arm (20) durch ein Schwenklager (30) gehalten ist.

6. Vorrichtung nach Anspruch 5,
**dadurch gekennzeichnet,**
**dass** das Schwenklager (30) eine Klaue (31) zur Aufnahme durch die Säule (11) aufweist, wobei die Klaue (31) einen Bolzen (33) zeigt, wobei durch den Bolzen (33) drehbar ein Stutzen (34) zur Aufnahme des Arms (20) vorgesehen ist, wobei der Stutzen (34) gegen die Kraft einer Feder (35) auf dem Bolzen (33) verdrehbar ist.

7. Vorrichtung nach Anspruch 6,
**dadurch gekennzeichnet,**
**dass** der Stutzen (34) in Schließstellung des Arms (20) an einem Anschlag (36) anliegt.

8. Vorrichtung nach einem der voranstehenden Ansprüche,
**dadurch gekennzeichnet,**
**dass** die Arretiervorrichtung (50) einen hülsenförmigen Sattel (51) umfasst, der die Drehsäule (11) umgibt, wobei die Drehsäule (11) relativ zum Sattel (51) verdrehbar ist, wobei der Sattel (51) mit dem Fahrzeug drehfest verbunden ist, wobei die Drehsäule (11) einen axial auf der Drehsäule (11) verschieblichen, aber drehfest mit Drehsäule (11) verbundenen Ring (52) aufweist, der in formschlüssigen Eingriff mit dem Sattel (51) bringbar ist.

9. Vorrichtung nach Anspruch 8,
**dadurch gekennzeichnet,**
**dass** der Sattel (51) dem Ring (52) zugewandt, mindestens eine Ausnehmung (51 a) zur Aufnahme einer am Ring (52) angeordneten Nase (52a) aufweist.

10. Verfahren nach wenigstens einem der vorangehenden Ansprüche,
**dadurch gekennzeichnet,**
**dass** der Ring (52) entgegen der Kraft einer Feder (62) axial verschieblich ist.

11. Verfahren nach wenigstens einem der vorangehenden Ansprüche,
**dadurch gekennzeichnet,**
**dass** der Ring (52) mit dem Sattel (51) verriegelbar ist

12. Verfahren nach wenigstens einem der vorangehenden Ansprüche,
**dadurch gekennzeichnet,**
**dass** zur Verriegelung ein Schloss (57) vorgesehen ist.
